# EUROPÄISCHE PATENTANMELDUNG

(11) **EP 0 913 522 A1**
(43) Veröffentlichungstag der Anmeldung: **06.05.1999**
(21) Anmeldenummer: 98119474.9
(22) Anmeldetag: 15.10.1998
(51) Int. Cl.: E01C 5/22, E01F 9/04

(54) **Kunstharzgebundener Strassenpflaster-Formstein, Verfahren zu dessen Herstellung sowie Verwendung**

(30) Priorität: 28.10.1997 DE 19747475
(71) Anmelder: Agomer Gesellschaft mit beschränkter Haftung, 63457 Hanau (DE); F. WYSSBROD AG, CH-2542 Pieterlen (CH)
(72) Erfinder: Schröder, Axel, Dr., 63456 Hanau (DE); Kerschner, Emil, 63517 Rodenbach (DE); Kizewski, Ingrid, 63457 Hanau (DE); Pfautsch, Horst, 63796 Kahl (DE); Streit, Jürgen, 63755 Alzenau (DE); Jaeckel, Rüdiger, 63505 Langenselbold (DE); Wyssbrod, Fernando, 2345 Les Breuleux (JU) (CH)

(57) **Zusammenfassung**

Erfindungsgemäße kunstharzgebundene Straßenpflaster-Formsteine kennzeichnen sich dadurch, daß sie eine im gepflasterten Zustand an der Sichtfläche befindliche Oberfläche aus Straßenmarkierungsmasse auf Kunstharzbasis aufweisen. Erfindungsgemäße Pflastersteine sind einfach zu verlegen und weisen eine Markierung von hoher Dauerhaftigkeit auf, wobei hervorzuheben ist, daß die Haftung zwischen Straßenmarkierungsmasse und Straßenpflaster-Formstein-Körper durch eine werksseitig vorgenommene Aufbringung sehr viel ausgeprägter ist als dies bei einer nachträglichen Markierung von Pflastersteinen im verlegten Zustand möglich ist. Schließlich sind die erfindungsgemäßen Pflastersteine universell an alle nachgefragten Formen und Designwünsche anpaßbar.

## Beschreibung

Die Erfindung betrifft Straßenpflaster-Formsteine mit kunstharzgebundenem Körper. Insbesondere bezieht sich die Erfindung auf einfach und dauerhaft zu markierende Pflastersteine auf Kunstharzbasis, ein Verfahren zu deren Herstellung sowie auf deren Verwendung.

Vielfach gibt es Straßenpflaster, welches nicht einfach mit Markierungen zu versehen ist. Sollen beispielsweise in einer Fußgängerzone oder verkehrsberuhigten Zone Markierungen oder Zebrastreifen aufgebracht werden, so ist die Haftung von Markierungsmassen auf Pflastersteinen grundsätzlich schlecht. Obwohl in der Praxis eine Reihe von Verfahren zur Verlegung von Straßenmarkierungen auf gepflasterten Straßen erprobt worden sind, hat es sich immer wieder gezeigt, daß die Markierungen zuerst Risse über den Fugen bekommen, wobei sich die Markierungen im Randbereich der einzelnen Pflastersteine flächenhaft abzulösen beginnen und dadurch schnell unansehnlich werden. Außerdem geht die Ablösung der Markierungen relativ schnell weiter, so daß Markierungen - auch aus aufwendigen und teuren Markierungsstoffen - auf Pflasterstraßen erfahrungsgemäß nach einigen Monaten verschwinden, während man bei anderen Straßendecken in Jahren rechnet.

Dies trifft auch auf Fahrbahnmarkierungsmassen auf Reaktionsharz-Basis zu, die auf Methylmethacrylat als wichtigstem Rohstoff basieren.

Als Ursache für den relativ schnellen Verschleiß von Markierungsoberflachen auf Straßenpflastersteinen aus Naturstein-Materialien, wie Basalt, Granit o. ä., kommt zum einen die geringe Haftfestigkeit der Markierungsmassen auf den Natursteinen in Frage. Auf der dichten, durch Verkehrsbelastung glatten Oberfläche der Naturpflastersteine ist üblicherweise keine hohe Haftfestigkeit zu erreichen. Auch Grundierungen bringen hierbei keine deutlichen Verbesserungen.

Zum anderen kommt es bei Natursteinen häufig zum Eindringen von großen Wassermengen bei Regenfällen in den Zwischenraum zwischen den Pflastersteinen, welche üblicherweise mit Sand und Straßenstaub ausgefüllt sind. Da die Steinmaterialien relativ dicht sind, kann Regenwasser nur sehr langsam austrocknen und unterwandert die Markierung. Die Feuchtigkeit steigt dabei von unten auf, gelangt zwischen Stein und Markierung und vermindert so die Haftfestigkeit.

Bei Pflastersteinen aus Beton kann durch die Verwendung einer Grundierung eine recht gute Anfangshaftung zwischen Straßenmarkierungsmasse und Betonpflasterstein erzielt werden. Leider kommt es jedoch bei den porösen Betonsteinen unter den o. g. Witterungseinflüssen zu einer Durchfeuchtung des gesamten Steines durch aufsteigende Feuchtigkeit. Wegen der wasserdampfdichten Markierungsstoffe auf der Oberfläche kann das Wasser nicht einfach verdunsten, so daß im Innern von Betonpflastersteinen ständig ein erhöhter Feuchtigkeitsgrad herrscht, der die Haftung zwischen Markierungsschicht und Betonstein-Oberfläche schwächt.

In neuerer Zeit hat man durch Aufbringen eines Kunstharzmörtels - zu einer gewissen Verankerung in den Fugen und zur Egalisierung der Oberfläche - vor der Applikation der Markierung die Lebensdauer von Straßenmarkierungen auf gepflasterten Steinen erhöhen können. Das Verfahren ist jedoch relativ teuer und führt nicht immer zum angestrebten Erfolg. Besonders, wenn sich die Pflastersteine durch Schwerlast-Verkehr gegeneinander bewegen, entstehen auch hier Risse und Spalten, von denen aus die Ablösung beginnt.

Aus der DE 43 24 190 A1 sind Kunststeine, insbesondere Platten für Radwege, bekannt, bestehend aus mindestens einem ausgehärteten Bindemittel und mindestens einem dem Bindemittel beigemischten Zusatzstoff. Als Bindemittel wird üblicherweise Beton verwendet. Die Tragschicht des Kunststeins kann mit einer Deckschicht fest verbunden sein, wobei das Bindemittel der Deckschicht ein Kunstharz ist, insbesondere ein Acryl- oder Polyesterharz, dem als Zusatzstoffe Altglaspartikel und ein Farbstoff beigemischt sind.

Die in der DE 43 24 190 A1 offenbarten Gegenstände sind großflächig, vorzugsweise plattenförmig, und als solches nicht für Schwerlastverkehr geeignet. Dem Kunstharz der Deckschicht ist ein zur Einfärbung von Kunststoffen geeigneter Feststoff beigemischt, welcher der Deckschicht die Signalfärbung verleiht. Bei derlei Signalfarben ist jedoch davon auszugehen, daß diese die Aufgaben von Straßenmarkierungen gemäß ZTV-M 84 (Zusätzliche Technische Vorschriften und Richtlinien für Markierungen auf Straßen von 1984) nicht erfüllen können.

Darüber hinaus ist der Einsatz von Glasbruch in der Deckschicht äußerst nachteilig und dadurch unerwünscht. Glassplitter erzeugen Reflexion, bei Straßenmarkierung erwünscht ist jedoch Retroreflexion. Als Fazit bleibt festzuhalten, daß die Platten gemäß der DE 43 24 190 A1 bei Einsatz als echte Straßenmarkierungen auf Kreuzungen oder im Straßenverlauf versagen müssen, weil sie die verkehrstechnischen Anforderungen gemäß ZTV-M 84 im Hinblick auf die Tages- und Nachtsichtbarkeit, Griffigkeit und Haltbarkeit nicht erfüllen.

Außerdem ist die Ablösung der Deckschicht von der Tragschicht gemäß Stein aus DE 43 24 190 A1 ein zusätzliches Problem.

Die EP 0 518 854 A1 betrifft Betonsteine für Verkehrsflächen, die zur Erzielung eines hohen Reflexionsvermögens aus einem Unterbetonteil und einem lichtreflektierenden Vorsatzbetonteil bestehen, wobei der Unterbetonteil und der Vorsatzbetonteil miteinander einstückig verbunden sind. Obwohl der Vorsatz Reflexperlen aufweisen kann, entspricht Beton nicht einem Markierungsstoff im Sinne der ZTV-M 84. Außerdem werden die Anforderungen an die Tagessichtbarkeit von einem derartigen Bauteil nicht erfüllt.

Aus der DE 19 15 173 A1 bekannt gewordene Markierungen für Fahrbahnen, Wege u. dgl. sind ebenfalls keine Markierungen im Sinne der ZTV-M 84. Das Eingießen von solchen Elementen in Asphaltfahrbahnen ist ebenfalls nicht durch die Behörden erlaubt. Nachteilig ist ferner die Herstellung der Elemente durch Kalt- oder Warmverformung. Eine Fertigung durch chemische Härtung von Reaktionsharzen wäre vorzuziehen.

Auch die DE 42 32 751 A1 betrifft lediglich Beton-Formstein mit Vorsatzschicht, zudem ohne Markierungseigenschaften gemäß ZTV-M 84.

Schließlich zeigt auch das DE 296 00 327 U1 einen Formstein aus Beton, bei dem die Oberfläche auf besondere Weise modifiziert werden kann, der jedoch aus klassischem Beton besteht.

Angesichts dieses Standes der Technik lag der vorliegenden Erfindung mithin die Aufgabe zugrunde, einen einfach und dauerhaft markierbaren Pflasterstein zur Verfügung zu stellen, dessen Verwendung zugleich helfen soll, die relativ hohen Wartungskosten für die Pflege und Erneuerung von Straßenmarkierungen, wie Zebrastreifen u. dgl., zu reduzieren und der darüber hinaus auch noch einfach in der Fertigung sein soll.

Dabei soll der neu zu schaffende Stein insbesondere ein Pflasterstein sein, d. h., er soll vorzugsweise kubisch oder quaderförmig sein, mit Dimensionen, wie sie die üblichen Basalt- oder Granitpflastersteine aufweisen.

Ferner sollen mit dem neuen Stein die Anforderungen an die Straßenmarkierung gemäß ZTV-M 84 ohne weiteres erfüllbar sein.

Gelöst werden diese sowie weitere nicht im einzelnen genannte Aufgaben durch einen Straßenpflaster-Formstein der eingangs genannten Art, der sich durch das Merkmal des kennzeichnenden Teils von Anspruch 1 auszeichnet. Vorteilhafte Ausgestaltungen sind Gegenstand der auf Anspruch 1 rückbezogenen Ansprüche.

Dadurch, daß ein kunstharzgebundener Straßenpflaster-Formstein eine im gepflasterten Zustand an der Sichtfläche befindliche Oberfläche aus Straßenmarkierungsmasse auf Kunstharz-Basis mit Markierungseigenschaften gemäß ZTV-M 84 aufweist, gelingt es in nicht ohne weiteres vorhersehbarer Weise, einen einfach zu verlegenden Pflasterstein zu schaffen, der eine Markierung von hoher Dauerhaftigkeit aufweist, bei der insbesondere die Haftung zwischen Straßenmarkierungsmasse und Straßenpflaster-Formsteinkörper durch die werksseitig vorgenommene Aufbringung sehr viel ausgeprägter ist als dies bei einer nachträglichen Markierung von Pflastersteinen im verlegten Zustand möglich erscheint. Zudem gelingt es mit den erfindungsgemäßen Maßnahmen, die Haftzugwerte von Markierungsmasse auf Pflasterstein-Formkörpern aus Polymerbeton deutlich gegenüber den Beton-Pflastersteinen zu steigern. Darüber hinaus kann durch die werksseitig vorgenommene Formung des Straßenpflastersteines, zusammen mit der werksseitig vorgenommenen Markierung des Formsteines, eine universelle Anpassung an alle nachgefragten Formen und Designwünsche einfach befriedigt werden.

Straßenpflaster-Formstein, Formstein oder Pflasterstein bedeutet im Rahmen der Erfindung ein Element, das zum Ersatz von an sich bekannten Pflastersteinen, wie sie üblicherweise aus Basalt oder Granit hergestellt werden, geeignet ist. Z. B. also kubische (etwa 10 x 10 x 10 cm) oder quaderförmige (etwa 10 x 10 x 20 cm) Pflastersteine, wobei erfindungsgemäße Pflastersteine kunstharzgebunden, also Kunststoffsteine, sind.

Insbesondere eignen sich die Straßenpflaster-Formsteine gemäß der Erfindung zum Ersatz von oder zum gleichzeitigen Verlegen mit Pflastersteinen, wie sie in der DIN 18 502, Stand Dez. 1965, beschrieben sind.

Vorteilig weisen die Pflastersteine der Erfindung Formate von Großpflastersteinen, Kleinpflastersteinen oder Mosaikpflastersteinen auf. Bevorzugte Formate sind (mit Abweichungen von etwa ± 15 %, vorzugsweise ± 10 %):

| **Breite / mm** | **Länge / mm** | **Höhe / mm** |
|---|---|---|
| 160 | 160-220 | 160 |
| | | 140 |
| 140 | 140-200 | 150 |
| | | 130 |
| 120 | 120-180 | 130 |
| 100 | 100 | 100 |
| 90 | 90 | 90 |
| 80 | 80 | 80 |
| 60 | 60 | 60 |
| 50 | 50 | 50 |
| 40 | 40 | 40 |

Sofern die kunstharzgebundenen Pflastersteine der Erfindung zugleich mit Pflastersteinen aus natürlichen Materialien verlegt werden sollen, sind für die natürlichen Materialien solche bevorzugt, zu denen Granit, Basalt, Basaltlava, Diorit, Grauwacke, Melaphyr, Gabbro und dergleichen gehören.

Unter kunstharzgebundenen Straßenpflaster-Formsteinen werden dabei im erfindungsgemäßen Sinne Pflastersteine verstanden, welche wesentlich auf Kunstharzen als Bindemittel basieren, die mit entsprechenden Füllstoffen, Pigmenten und Hilfsstoffen versehen sind, und die für Zwecke der Straßenpflasterung einsetzbar sind. Unter anderem sind auch vorgefertigte Elemente mit Fugenimitationen, z. B. in der Breite eines Zebrastreifens möglich. Insbesondere werden jedoch unter Straßenpflaster-Formsteinen solche Elemente verstanden, die durch entsprechende Formgebung an die Form üblicher Pflastersteine aus Natur- oder Betonstein angepaßt sind. Die Verwendung von Zement als Bindemittel scheidet gemäß der Erfindung aus.

Dabei besteht das Bindemittel, welches zusammen mit den Zuschlagsstoffen den Körper des erfindungsgemäßen Straßenpflaster-Formsteines bildet, aus Kunstharz, worunter im Grunde jedes auf Kunststoffen, Reaktionsharzen und Schmelzmassen basierende Material zu verstehen ist, das den Formsteinen die geeignete Härte und Festigkeit verleiht.

In einer ersten Variante der Erfindung ist es möglich, daß der erfindungsgemäße Formstein aus Straßenmarkierungsmasse, vorzugsweise massiv, ist. Zur Herstellung des Straßenpflaster-Formstein-Körpers wird also eine Straßenmarkierungsmasse auf Kunstharz-Basis selbst eingesetzt. Dabei ist es von besonderem Vorteil, wenn der Körper massiv aus dieser Straßenmarkierungsmasse gefertigt ist. Der besondere Vorteil der massiven Ausführungsform aus Straßenmarkierungsmasse besteht unter anderem darin, daß der gesamte Straßenpflaster-Formstein aus einem einheitlichen Material gefertigt sein kann, wodurch keinerlei Haftungsprobleme zwischen Oberfläche des Kunstharz-Formsteines und der Straßenmarkierungsmasse entstehen können. Darüber hinaus kann bei entsprechender Härte ein extrem abnutzungsfester Straßenpflaster-Formstein auf diese Weise erzeugt werden. Neben einer massiven Ausführungsform ist es des weiteren möglich, durch Einbau von Hohlräumen in den Körper des Straßenpflaster-Formsteines bei entsprechend festem Kunstharz eine zusätzliche Verbilligung des massiven Straßenpflaster-Formsteines zu erzeugen.

Straßenmarkierungsmasse, Markierungsmasse oder Markierungseigenschaften beziehen sich im Sinne der Erfindung ebenso wie Markierung auf die ZTV-M 84 in der Ausgabe von 1984. D. h., es werden alle in dieser technischen Vorschrift definierten Anforderungen von Gegenständen gemäß der Erfindung erfüllt. Insbesondere erfüllen Markierungen sowie die in Frage kommenden Materialien folgende Kriterien:
- Sie sind ausreichend weiß, retroreflektierend und schmutzabweisend, so daß sie unter allen Beleuchtungsverhältnissen ausreichend erkennbar sind (Tages- und Nachtsichtbarkeit).
- Sie sind ausreichend rutschfest (Griffigkeit).
- Sie sind auf der Unterlage gut haftend, ausreichend witterungs- und tausalzbeständig und weisen eine ausreichende Verschleißfestigkeit gegenüber der zu erwartenden Verkehrsbelastung auf (Haltbarkeit).
- Sie sind nach der Applikation möglichst bald überfahrbar (Trocknungszeit).
- Sie dürfen aus fahrdynamischen und entwässerungstechnischen Gründen keinen zu hohen Überstand über die Fahrbahn aufweisen (Schichtdicke).
- Sie dürfen keine Risse in der Fahrbahndecke verursachen, die zu wesentlichen Deckenschäden führen (Rißbildung).
- Sie dürfen keine Stoffe enthalten, die gegen Arbeitsschutz- und Umweltschutzbestimmungen verstoßen (Arbeits- und Umweltschutz).

Darüber hinaus müssen die Markierungsmaterialien ausreichend lagerstabil und gut verarbeitbar sein.

Ferner werden alle Bedingungen und Anforderungen der DIN EN 1436 in der Fassung des Entwurfs vom Juli 1994 "Straßenmarkierungsmaterialien" erfüllt.

Markierungsmassen der Erfindung bestehen aus einem Bindemittel aus Kunststoff (einschließlich Reaktionsharzen und Schmelzmassen) und entsprechenden Füllstoffen, Pigmenten und Hilfsstoffen. Als Füllstoffe können mineralische Feinfüllstoffe (gesiebt, gemahlen oder chemisch hergestellt) wie Schwerspat, Calciumcarbonat oder Quarzmehl, eingesetzt werden. Zusätzlich zu diesen Feinfüllstoffen ist es auch möglich, gröbere Körnungen von Sanden, Calciten, Flint, etc. beizumischen. Ein Teil der Füllstoffe kann auch aus sogenannten Reflexperlen bestehen. Dies sind Glasperlen, die durch sogenannte Retroreflexion die Nachtsichtbarkeit der Markierungen stark erhöhen. Neben mineralischen Füllstoffen können auch organische, metallische, gesinterte und geschmolzene Produkte (Schlacken, Flugaschen, etc.) verwendet werden. Pigmente können anorganischer (Oxidpigmente) oder organischer Natur sein. Als Hilfsstoffe kommen sowohl Verarbeitungshilfsmittel (z. B. gegen Sedimentation) als auch Mittel zur Qualitätsverbesserung (z. B. Mittel gegen Vergilbung) sowie - im Falle von Reaktionsharzen - Katalysatoren und Härter für die Aushärtung der Kunststoffe in Betracht.

Wenn es aufgrund von wirtschaftlichen Überlegungen angezeigt ist, eine noch kostengünstigere Variante einzusetzen, ist eine zweite Ausführungsform der Erfindung besonders zweckmäßig, in der der Straßenpflaster-Formstein gemäß der Erfindung einen Körper aus Polymerbeton aufweist.

Dabei betrifft eine erste Ausgestaltung einen Formstein aus modifiziertem Polymerbeton mit Markierungseigenschaften, während eine zweite Abwandlung Polymerbeton als solchen betrifft.

Auch hierbei ist selbstverständlich bei entsprechend festem Kunstharzbeton der Einbau von Hohlräumen in den Körper des Straßenpflaster-Formsteines möglich. Im Zusammenhang mit der Erfindung bedeutet dabei "Polymerbeton", ebenso wie "Kunstharzbeton", im engeren Sinne eigentlich Kunstharzgebundener Beton, wodurch darauf hingewiesen wird, daß Füllstoffe in einer gewissen abgestuften Körnung (Sieblinie) nicht durch Zementleim sondern durch Kunstharz gebunden sind. Optimierte Sieblinien können in diesem Zusammenhang bei vergleichsweise niedrigen Harzgehalten (meist zwischen 6 und 14 %) eine hohe Festigkeit ermöglichen.

Von Interesse sind in der Erfindung Straßenpflaster-Formsteine mit einem Körper aus Kunstharzbeton (sogenanntem Polymerbeton), die z. B. unter Zuhilfenahme von Epoxidharz, Polyesterharz, Polyurethanharz, thermoplastischen Massen oder Methacrylatharzen hergestellt worden sind.

Besonders zweckmäßig sind aufgrund ihrer hohen Biegezugfestigkeit, Druckfestigkeit und ihrer schnellen Aushärtung Methacrylatharz-basierte Kunstharzbeton-Steine.

Die Markierungen auf der Sichtfläche des erfindungsgemäßen Straßenpflaster-Formsteines können im Prinzip mit Hilfe der gleichen Bindemittel gefertigt sein, wie die Körper der Polymerbeton-Steine selbst. Auch Kombinationen von verschiedenen Bindemittel-Basismaterialien bei Körper oder Markierungsoberfläche sind möglich.

In einer bevorzugten Ausgestaltung haben sich als Bindemittel für sogenannte Kaltplastik- und Kaltspritzplastik-Markierungen vor allem Methacrylatharze bewährt. Diese sind insbesondere auch im erfindungsgemäßen Rahmen von Vorteil, wenn als Material für den Körper des Straßenpflaster-Formsteines ein Polymerbeton eingesetzt wird, welcher auf Methacrylatharzen als Bindemittel basiert. Hierbei kommt vor allem die gute Zwischenschicht-Haftung von Methacrylatharzen zum Tragen, so daß ein Aufbau aus Polymerbeton mit Methacrylatharz-Bindemittel und einer Kalt- bzw. Kaltspritzplastikmarkierung auf Basis eines Methacrylatharzes besonders vorteilhaft, insbesondere von hoher Dauerhaftung, ist.

Bei den Polymerbeton-Steinen mit Markierungsoberfläche kann der Polymerbeton der Farbe der Markierungsmasse (z. B. weiß oder gelb) oder auch der Farbe der umgebenden Natur- oder Betonsteine angepaßt werden. Ebenso können die Straßenmarkierungsmassen auf Kunstharz-Basis selbst in unterschiedlichen Farben, meist weiß oder gelb, aber auch in allen anderen Farben (z. B. rot für Radwege, blau für Parkstreifen, etc.) eingefärbt sein. Die Pigmentmengen sind dabei bevorzugt so hoch, daß die verkehrstechnischen Werte erfüllt werden.

Bei der Herstellung von Polymerbeton werden z. T. Vorschichtharze (Gelcoatharze) eingesetzt. Auch diese können bei entsprechender Pigmentierung die Aufgaben der Markierungsschicht erfüllen.

Die Schichtdicken der Oberflächenbeschichtungen aus Markierungsmassen können vorzugsweise zwischen 0,3 und 10 mm in Abhängigkeit vom Markierungsstoff und der angestrebten Lebensdauer liegen.

Die Markierungsoberfläche auf dem Polymerbeton-Stein kann eben, profiliert oder strukturiert sein. In einer bevorzugten Ausgestaltung kennzeichnet sich der Straßenpflaster-Formstein gemäß der Erfindung dadurch, daß er eine Oberfläche in Form einer ebenen Markierungsoberfläche aufweist. Diese ist sehr einfach herstellbar, von guter Dauerhaftigkeit und für viele Einsatzzwecke ausreichend.

Die profilierten und strukturierten Markierungen (dem Fachmann als sogenannte Typ-II-Markierungen geläufig) haben gegenüber Markierungen mit ebener Oberfläche den Vorteil einer erhöhten Nachtsichtbarkeit bei nasser Fahrbahn. Daher handelt es sich auch hierbei um besondere Ausführungsformen.

Daneben sind auch weitere Variationen der Oberfläche aus Markierungsmasse möglich. So lassen sich Ausführungsformen des erfindungsgemäßen Straßenpflaster-Formsteines herstellen, die auf der Sichtfläche (Straßenmarkierungsmasse) aufgesetzte Reflektoren aufweisen. Hierzu gehören insbesondere die klassischen Katzenaugen mit Reflexion oder Rückstrahleffekt. Die Reflektoren können beispielsweise auf oder an bestimmten, dem Fachmann an sich bekannten Halterungen mit dem erfindungsgemäßen Formstein befestigt sein. Neben Reflektoren kommen auch weitere die Nachtsichtbarkeit verbessernde Mittel zum Einsatz. Hierzu gehören insbesondere Reflexperlen zur Verbesserung der Nachtsichtbarkeit durch Retroreflexion. So können beispielsweise als Reflexperlen (eingemischt oder nachgestreut) alle in der Markiertechnik verwendeten Perlen (unterschiedliche Korngrößen und Oberflächenbehandlung) in Mischungen mit dazu passenden Griffigkeitsmitteln verwendet werden. Gemische aus Reflexperlen und Griffigkeitsmitteln sind dem Fachmann dabei als Nachstreumittel geläufig. Auch Kunstharz-gebundene Agglomerate sind erhältlich und können verwendet werden. Reflexperlen oder Nachstreumittel sind auch gemeinsam mit Reflektoren - wie etwa Katzenaugen - einsetzbar, ggf. auch zusätzlich zu normalen Markierungen.

Besonders vorteilig können Pflastersteine aus Polymerbeton auch herstellungsseitig bereits mit Reflektoren (Prinzip der Reflexion) und/oder Reflexperlen (winzige bis gröbere Glasperlen), die nach dem Prinzip der Retroreflexion wirken, versehen werden.

Erfindungsgemäße Straßenpflaster-Formsteine lassen sich auf verschiedene Weise herstellen.

Zum einen kann man eine entsprechende Form mit der katalysierten Polymerbeton-Rezeptur so weit füllen, daß oben auf die noch flüssige, angelierte oder bereits gehärtete Mischung eine Schicht katalysierte Markierungsmasse aufgebracht werden kann, die dann aushärtet. Die Kunststoffbetonmassen werden meistens durch Rüttelverdichtung entlüftet. Dies geschieht zweckmäßigerweise vor Aufbringen der Markierungsmasse.

Andererseits ist es möglich, eine Schicht Markierungsmasse in einer entsprechenden Form vorzulegen und vor, während oder nach der Härtung mit Polymerbeton zu hinterfüttern. In diesem Fall bildet die Unterseite später die Oberfläche. Wenn gerüttelt werden soll, muß die Markierungsmasse erst aushärten.

Meistens wird bei Straßenmarkierungen gute Nachtsichtbarkeit durch Retro-Reflexion gefordert. Diese Retro-Reflexion wird, wie bereits weiter oben erwähnt, durch eingemischte und nachgestreute Reflexperlen erreicht. In der Regel wird den Nachstreuperlen noch ein Griffigkeitsmittel zugemischt. Diese Mischungen werden als Nachstreumittel bezeichnet. Die nachgestreuten Reflexperlen sind besonders wichtig für die Retro-Reflexion frisch verlegter Markierungen, da die eingemischten Perlen je nach Verkehrsbelastung erst später vorscheinen und damit zur Wirkung kommen. Bei dünnschichtigen Spritzmarkierungen werden meistens keine Reflexperlen eingemischt, die Retro-Reflexion wird nur mit Nachstreumitteln erzielt. Die nachgestreuten Reflexperlen können nur wirken, wenn sie zum Teil aus der Markierungsoberfläche herausragen, sie zeigen die beste Wirkung, wenn sie ungefähr zur Hälfte eingebettet sind. Dies ist bei der Herstellung von Polymerbeton-Steinen mit Markierungsoberfläche zu berücksichtigen, wenn gute Nachtsichtbarkeit gefordert ist.

Daher besteht zum einen die Möglichkeit, die Nachstreumittel nach Aufbringen der Markierungsmasse vor deren Aushärtung wie üblich von Hand, mit einer Perlpistole oder einem Walzenperlenstreuer in der gewünschten bzw. im Prüfzeugnis angegebenen Menge nachzustreuen.

Alternativ hierzu kann man, sofern die Markierungsmasse zuerst in eine Form gefüllt werden soll, in die Form ein wasserlösliches Trennmittel (z. B. eine wäßrige Lösung von Polyvinylalkohol) geben und das Nachstreumittel in das nasse Trennmittel einstreuen. Das Nachstreumittel sollte dabei nur etwa zur Hälfte benetzt werden. Nach dem Trocknen wird mit Markierungsmasse und danach mit Polymerbetonmasse hinterfüllt. Nach dem Erhärten und Entformen wird das Trennmittel mit Wasser abgewaschen, wodurch die Nachstreumittel zum Vorschein kommen.

Oder es werden in Formen aus Silikonkautschuk feine Reflexperlen eingefüllt. Wenn man die Form durch Umdrehen wieder ausleert, bleibt eine Schicht der feinen Perlen an der Innenseite der Form (durch statische Aufladung) haften. Beim Einfüllen der Markierungsmasse werden die Reflexperlen circa zur Hälfte eingebettet. Vorzugsweise wird erst nach Angelieren bzw. Erhärten der Markierungsmassen mit Polymerbeton hinterfüttert und verdichtet.

Sofern Pflastersteine aus Polymerbeton auch mit den o. g. Reflektoren zu versehen sind, hat es sich als vorteilhaft herausgestellt, die Reflektoren auf Halterungen anzubringen. Diese Halterungen sollten vorzugsweise mit einem entsprechenden Dorn versehen sein, der vor dem Erhärten so in den Polymerbeton (mit oder ohne Normalmarkierung) eingebettet wird, daß nach dem Härten die Reflektoren in gewünschter Weise positioniert sind.

Grundsätzlich können die Markierungsmassen, - auch bei sogenannten Typ-II-Markierungen -, auf dem flüssigen, angelierten oder festen Polymerbeton durch die üblichen Verarbeitungsmethoden, wie Spritzen, Rollen, Streichen, Extrudieren, Schleudern oder Gießen sowie mit Ziehschuhen aufgebracht werden. Bei der umgekehrten Herstellungsweise (Vorlage einer Schicht Markierungsmasse und Hinterfütterung mit Polymerbeton) ist es zweckmäßig, eine profilierte oder strukturierte Oberfläche durch entsprechende Gestaltung der Form zu erreichen.

Gegenstand der Erfindung ist auch die Verwendung der kunstharzgebundenen Straßenpflaster-Formsteine zur Herstellung von Straßenmarkierungen durch Einbau in Reihen, Blocks, Symbolen, Schriften und ähnlichem beim Neuverlegen von Natur- oder Betonsteinpflaster oder beim Ersatz von vorhandenem Pflaster.

Nachfolgend wird die Erfindung anhand von Ausführungsbeispielen unter Bezugnahme auf die beigefügten Figuren näher erläutert.

In den Figuren zeigen:
- Fig. 1: eine erste erfindungsgemäße Ausführungsform eines kunstharzgebundenen Straßenpflaster-Formsteines im Querschnitt, wobei der Formstein noch in der Form befindlich ist;
- Fig. 2: eine zweite erfindungsgemäße Ausführungsform eines kunstharzgebundenen Straßenpflaster-Formsteines im Querschnitt, wobei der Formstein noch in der Form befindlich ist;
- Fig. 3: eine dritte erfindungsgemäße Ausführungsform eines kunstharzgebundenen Straßenpflaster-Formsteines im Querschnitt, wobei der Formstein noch in der Form befindlich ist;
- Fig. 4: eine vierte erfindungsgemäße Ausführungsform eines kunstharzgebundenen Straßenpflaster-Formsteines im Querschnitt, wobei der Formstein noch in der Form befindlich ist;
- Fig. 5: eine fünfte erfindungsgemäße Ausführungsform eines kunstharzgebundenen Straßenpflaster-Formsteines im Querschnitt, wobei der Formstein noch in der Form befindlich ist;
- Fig. 6: eine sechste erfindungsgemäße Ausführungsform eines kunstharzgebundenen Straßenpflaster-Formsteines im Querschnitt, wobei der Formstein noch in der Form befindlich ist;
- Fig. 7: eine siebte erfindungsgemäße Ausführungsform eines kunstharzgebundenen Straßenpflaster-Formsteines im Querschnitt, wobei der Formstein noch in der Form befindlich ist;
- Fig. 8: eine achte erfindungsgemäße Ausführungsform eines kunstharzgebundenen Straßenpflaster-Formsteines im Querschnitt, wobei der Formstein noch in der Form befindlich ist;
- Fig. 9: eine neunte erfindungsgemäße Ausführungsform eines kunstharzgebundenen Straßenpflaster-Formsteines im Querschnitt, wobei der Formstein noch in der Form befindlich ist;
- Fig. 10: eine zehnte erfindungsgemäße Ausführungsform eines kunstharzgebundenen Straßenpflaster-Formsteines im Querschnitt, wobei der Formstein noch in der Form befindlich ist.

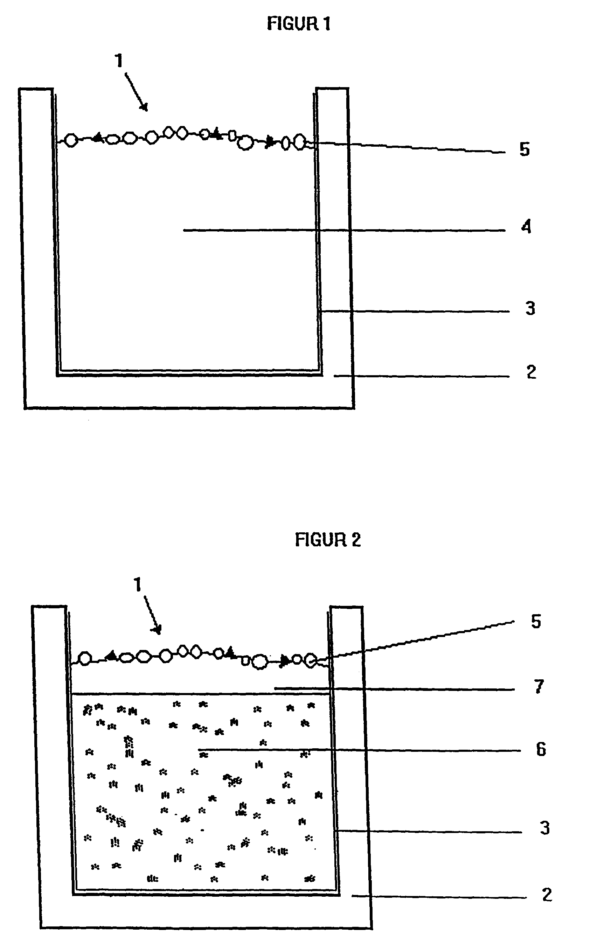

In der Figur 1 bezeichnet das Bezugszeichen 1 den erfindungsgemäßen Formstein. Das Bezugszeichen 2 bedeutet die Form, welche zur Herstellung des Formsteins 1 Anwendung findet. Bei der Form 2 handelt es sich um eine beliebige Hohlform, welche beispielsweise aus einem Silikonkautschuk oder einem ähnlichen oder anderen zur Herstellung von Gießkörpern üblichen Material besteht. Die Innenoberflächen der Form 2 weisen eine Schicht eines Trennmittels 3 auf. Hierbei handelt es sich beispielsweise um Trennwachs. Im Innern der Form 2 in Kontakt mit dem Trennmittel 3 befindet sich die Markierungsmasse 4, welche Nachstreumittel 5 aufweist. Die Markierungsmasse 4 weist die Bestandteile des Nachstreumittels 5 (Reflexperlen und Griffigkeitsmittel) im wesentlichen über ihr gesamtes Volumen auf, aus Klarheitsgründen wurden die entsprechenden Partikel des Nachstreumittels 5 jedoch nur an der im gepflasterten Zustand des erfindungsgemäßen kunstharzgebundenen Straßenpflaster-Formsteins 1 sichtbaren Oberfläche dargestellt. Es handelt sich somit um Premixperlen oder Grobfüllstoff.

Ein erfindungsgemäßer Formstein gemäß Figur 1 wird beispielsweise dadurch erhalten, daß man Markierungsmasse durch Zwangsmischung von 20,0 % Kunstharz, vorzugsweise Methacrylatharz, 10,0 % Titandioxid-Pigment, 20,0 % Mehlkorn, beispielsweise Quarzmehl, 25,0 % Grobkorn, z. B. Sand in der Körnung 0,1-0,5 mm, 24,8 % Reflexperlen der Körnung 0,1-0,8 mm und 0,2 % Thixotropierungsmittel herstellt und die so erhaltene Markierungsmasse mit einer zur Aushärtung wirksamen Menge eines Katalysators vermischt. Die katalysierte Markierungsmasse wird dann in die Form 2 gefüllt. Nach Aushärtung der Markierungsmasse kann der fertige Formstein 1 durch Entformung erhalten werden.

Es versteht sich, daß beim Beispiel zur Figur 1, ebenso wie bei allen folgenden Beispielen, die Prozentangaben Gewichtsprozent bedeuten.

Bei der in Figur 2 dargestellten Ausführungsform handelt es sich um einen kunstharzgebundenen Straßenpflaster-Formstein auf Polymerbeton-Basis. Anstelle der Markierungsmasse, welche bei dem in Figur 1 dargestellten Ausführungsbeispiel den gesamten Korpus des Formsteines ausmacht, wird für den Körper des Formsteines beim in Figur 2 dargestellten Ausführungsbeispiel Polymerbeton eingesetzt. Auf dem Körper aus Polymerbeton 6 ist eine Schicht aus sogenannter Kaltplastik 7 angeordnet.

Ein Formstein gemäß Figur 2 wird beispielsweise dadurch erhalten, daß man Polymerbeton durch Zwangsmischung von 10,0 % Kunstharz, vorzugsweise Methacrylatharz, 20,0 % Mehlkorn mit einer Sieblinie von 0-0,2 mm und 70,0 % Sand mit einer Sieblinie im Bereich von 0-8 mm herstellt, katalysiert und anschließend in die Form bringt. Auf die ggf. gerüttelte und ausgehärtete Polymerbeton-Masse wird eine Schicht von Kaltplastik 7 plus Nachstreumittel 5 aufgebracht, welche hinsichtlich der Rezeptur beispielsweise der Markierungsmasse aus Figur 1 entspricht.

Nach Entformung wird ein einsatztauglicher Polymerbeton-Straßenpflaster-Formstein erhalten, welcher über Markierungseigenschaften verfügt.

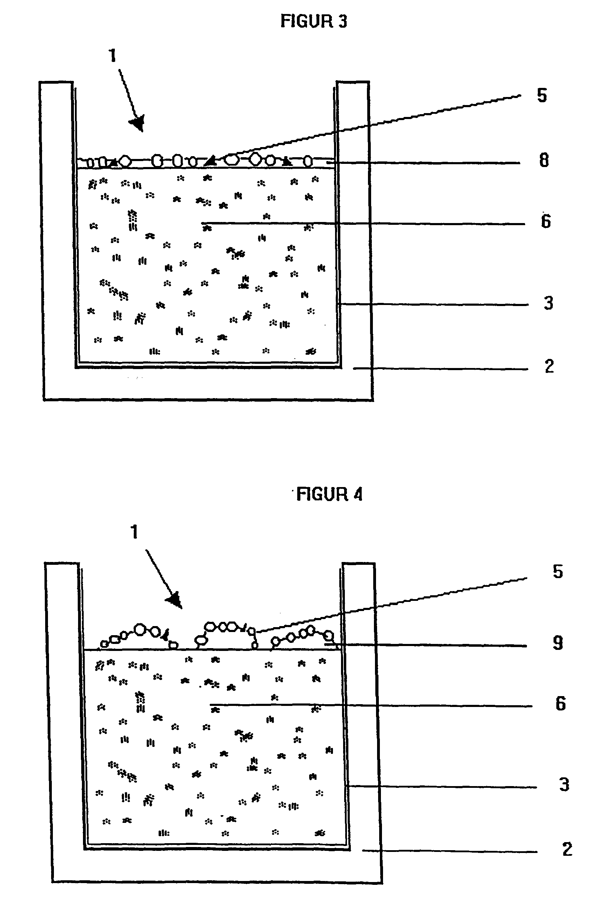

Die in Figur 3 dargestellte Ausführungsform eines erfindungsgemäßen Straßenpflaster-Formsteines entspricht der in Figur 2 dargestellten Variation, mit dem Unterschied, daß anstelle der Kaltplastik gemäß Figur 2 eine Kaltspritzplastik 8 als Markierungsschicht eingesetzt wird. Die Kaltspritzplastikschicht wird z. B. durch Zwangsmischung von 30 % Kunstharz, vorzugsweise Methacrylatharz, 10 % Titandioxid-Pigment, 59,4 % Mehlkorn, beispielsweise Calcit mit 5-25 µm, 0,3 % Dispergiermittel und 0,3 % Thixotropierungsmittel erhalten. Die so erhaltene Mischung wird katalysiert und auf die gerüttelte und bereits ausgehärtete oder angelierte Polymerbeton-Unterlage gefüllt. Auf die Oberfläche der Kaltspritzplastik wird Nachstreumittel 5 aufgetragen.

Die in Figur 4 dargestellte Ausführungsform beruht ebenfalls auf einem Korpus aus Polymerbeton. Anstelle von Kaltplastik 7 oder Kaltspritzplastik 8 weist die Ausführungsform gemäß Figur 4 jedoch eine Strukturmarkierung 9 auf. Diese Strukturmarkierung kann vorzugsweise aus demselben Material bestehen wie die Markierungsmasse 4 aus Figur 1, Beispiel 1.

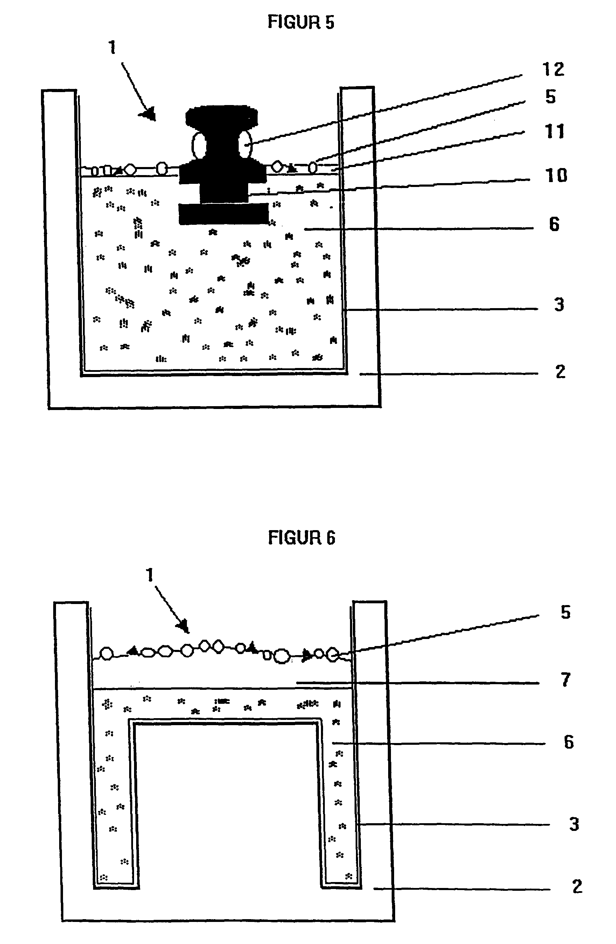

Eine weitere Ausführungsform, wie sie in Figur 5 dargestellt wird, basiert ebenfalls auf einem Körper aus Polymerbeton. Auf der Oberfläche des Polymerbetons 6 sind Reflektoren 12 (z. B. Katzenaugen) mittels einer eingebetteten Halterung 10 eingebracht. Des weiteren befinden sich an der Oberfläche des Polymerbetons, das ist die im gepflasterten Zustand an der Sichtfläche befindliche Oberfläche, Markierungen in Form von Kaltspritzplastik 11. Diese weisen beispielsweise Reflexperlen 5 auf.

Die in Figur 6 dargestellte Ausführungsform entspricht im wesentlichen einer in Figur 2 bereits gezeigten Variante, mit dem Unterschied, daß der Formstein aufgrund der Ausgestaltung der Form teilweise hohl ist. Dies wird durch die Form mit Zapfen für einen Hohlraum 2 ermöglicht.

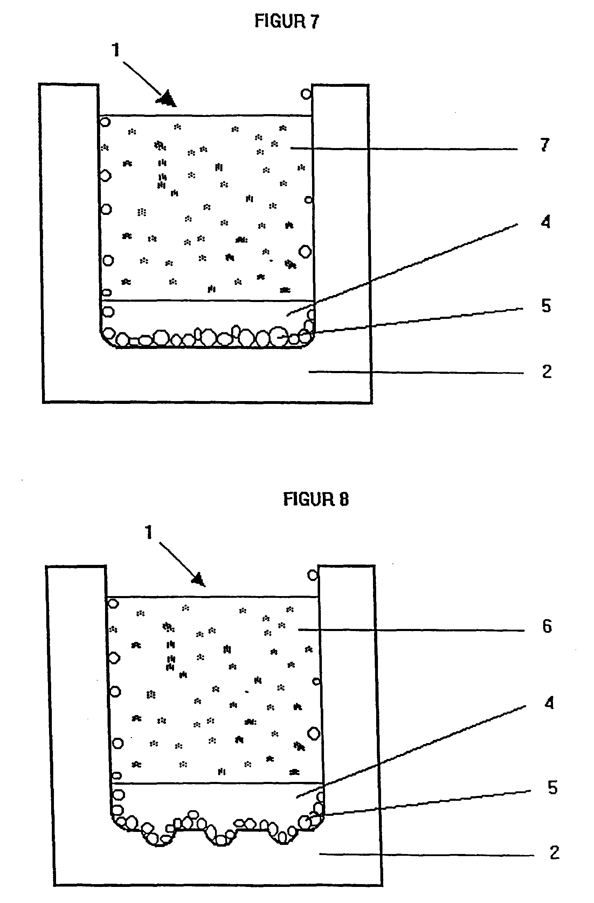

Eine weitere Variante der Erfindung wird in Figur 7 gezeigt. Hierbei handelt es sich um einen erfindungsgemäßen Formstein, der im "Negativverfahren" hergestellt wird. Man erkennt, daß bei der Verarbeitung in der Form 2, sofern diese aus Silikonkautschuk besteht, kein besonderes Trennmittel erforderlich ist. Am Boden der Form 2 ist eine Schicht aus Nachstreumittel 5 angeordnet. Auf diese folgt eine Schicht aus Markierungsmasse 4, an welche sich wiederum eine Schicht aus Polymerbeton 6 anschließt. Alle Schichten werden nacheinander in die Form eingebracht, wobei die reaktiven Schichten entsprechend katalysiert und ausgehärtet sind. Beim Entformen kann ein kunstharzgebundener Straßenpflasterstein entnommen werden, welcher im wesentlichen dem in Figur 2 gezeigten Beispiel entspricht.

Die in Figur 8 dargestellte Ausführungsform unterscheidet sich von der Ausführungsform gemäß Figur 7 lediglich dadurch, daß in die Form aus Silikonkautschuk 2 Vertiefungen eingearbeitet sind, genau gesagt am Boden der Silikonkautschuk-Form, was beim fertigen Straßenpflaster-Formstein eine strukturierte Markierungsschicht an der im gepflasterten Zustand an der Sichtfläche befindlichen Oberfläche ergibt.

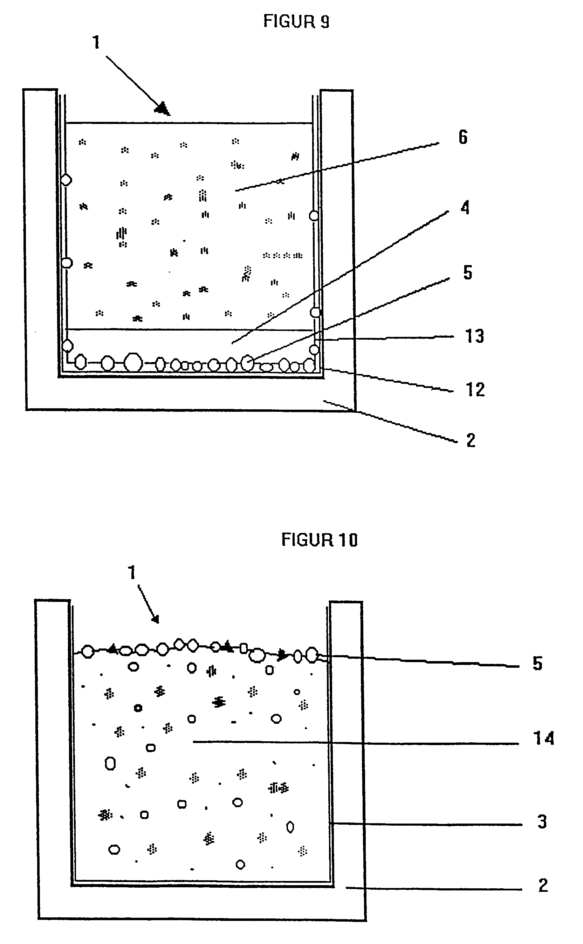

Schließlich zeigt die Ausführungsform gemäß Figur 9 einen erfindungsgemäßen Straßenpflaster-Formstein, der ebenfalls im "Negativverfahren" hergestellt wurde, wobei die Form 2 jedoch nicht aus einem flexiblen sondern aus einem starren Material bestehen kann. Zur Entformung des fertig ausgehärteten Formsteines kann in diesem Fall eine Schicht eines Trennwachses 12 dienen. Unterstützt werden kann die Entformung ebenfalls durch eine Schicht eines wasserlöslichen Trennmittels 13, das auch dazu dienen kann, das Nachstreumittel ca. zur Hälfte einzubetten und zu fixieren. Nach dem Entformen kann dieses wasserlösliche Trennmittel abgewaschen werden, das Nachstreumittel verbleibt an der Markierungsoberfläche. Ansonsten entspricht der Aufbau des Formsteines dem Prinzip, wie es in den Figuren 7 und 8 dargestellt ist.

Bei der in Figur 10 dargestellten Ausführungsform handelt es sich um einen Polymerbeton, welcher an sich Markierungseigenschaften aufweist.

Insbesondere wird der Polymerbeton mit Markierungseigenschaften 14 durch Mischung von 10,0 % Kunstharz, vorzugsweise Methacrylatharz, 10,0 % Mehlkorn mit einer Sieblinie von 0-0,2 mm, 10,0 % Titandioxid-Pigment, 50,0 % Sand mit einer Sieblinie 1-8 mm, 20,0 % Reflexperlen 0,1-0,8 mm erhalten.

Das nachfolgende Beispiel illustriert die Überlegenheit des z. B. gemäß Figur 2 erhaltenen Pflastersteins gegenüber einer Markierung auf einem herkömmlichen Pflasterstein gemäß Stand der Technik. Verschiedene Untergründe wurden mit Markierungsmasse (Kaltplastik 7) aus Beispiel zu Figur 1 oder 2 beschichtet.

Es wurden die Haftzugsfestigkeiten der Beschichtungen auf den Untergründen mit dem Haftprüfgerät HP-EM der Firma Herion nach DIN 51-220 Klasse 2 ≙ DIN ISO 1048 (ZTV-SIB 90 Anhang 2, Absatz 3) bestimmt.

| **Untergrund** | **Haftzugsfestigheit N/mm**^{**2**} |
|---|---|
| Beton | 2,0 |
| Basalt | 1,2 |
| Polymerbeton gemäß Figur 2 | 5,5 |

Daraus folgt eine hohe Dauerhaftigkeit von markierten Straßenpflastersteinen gemäß der Erfindung

## Patentansprüche

1. Kunstharzgebundener Straßenpflaster-Formstein,
**gekennzeichnet durch**
eine im gepflasterten Zustand an der Sichtfläche befindliche Oberfläche aus Straßenmarkierungsmasse auf Kunstharzbasis mit Markierungseigenschaften gemäß ZTV-M 84.

2. Formstein nach Anspruch 1,
**dadurch gekennzeichnet**,
daß er massiv aus Straßenmarkierungsmasse ist.

3. Formstein nach Anspruch 1,
**dadurch gekennzeichnet**,
daß er einen Körper aus modifiziertem Polymerbeton mit Markierungseigenschaften aufweist.

4. Formstein nach Anspruch 1,
**dadurch gekennzeichnet**,
daß er einen Körper aus Polymerbeton aufweist.

5. Formstein nach Anspruch 4,
**gekennzeichnet durch**
eine ebene Markierungsoberfläche.

6. Formstein nach Anspruch 4,
**gekennzeichnet durch**
eine profilierte oder strukturierte Markierungsoberfläche.

7. Formstein nach Anspruch 2, 3 oder 4 mit auf der Sichtfläche aufgesetzten Reflektoren und/oder aufgebrachten Reflexperlen und/oder aufgebrachtem Nachstreumittel.

8. Formstein nach Anspruch 1 oder einem oder mehreren der Ansprüche 4 bis 7,
**dadurch gekennzeichnet**,
daß die Straßenmarkierungsmasse Bindemittel auf Methacrylatbasis enthält.

9. Formstein nach einem oder mehreren der Ansprüche 4 bis 8,
**dadurch gekennzeichnet**,
daß der Polymerbeton auf Methacrylatharzbindemitteln basiert ist.

10. Verfahren zur Herstellung eines kunstharzgebundenen Straßenpflaster-Formsteins gemäß den Ansprüchen 1 sowie 4 bis 9,
**dadurch gekennzeichnet**,
daß man eine Form mit einer katalysierten Polymerbetonmischung füllt und auf die noch flüssige, angelierte oder bereits gehärtete Mischung eine Schicht katalysierte Markierungsmasse aufbringt, aushärten läßt und ggf. auf die aushärtende Markierungsmasse Reflexkörper aufsetzt oder einstreut.

11. Verwendung der Formsteine gemäß den Ansprüchen 1-9 zur Herstellung von Straßenmarkierungen durch Einbau in Reihen, Blocks, Symbolen, Schriften und ähnlichem beim Neuverlegen von Natur- oder Betonsteinpflaster oder beim Ersatz von vorhandenem Pflaster.
